# EUROPÄISCHE PATENTSCHRIFT

(11) **EP 3 867 036 B1**
(45) Veröffentlichungstag und Bekanntmachung des Hinweises auf die Patenterteilung: **05.04.2023**
(21) Anmeldenummer: 19773372.8
(22) Anmeldetag: 17.09.2019
(51) Int. Cl.: B29C 45/14, G05G 1/50, B60G 7/00, B29C 70/70, B29C 39/10

(54) **FAHRZEUGBAUTEIL FÜR EIN KRAFTFAHRZEUG UND VERFAHREN ZUM HERSTELLEN EINES SOLCHEN FAHRZEUGBAUTEILS**
VEHICLE COMPONENT FOR A MOTOR VEHICLE AND METHOD FOR PRODUCING A VEHICLE COMPONENT OF THIS KIND
COMPOSANT DE VÉHICULE POUR UN VÉHICULE AUTOMOBILE ET PROCÉDÉ DE FABRICATION D'UN COMPOSANT DE VÉHICULE DE CE TYPE

(30) Priorität: 19.10.2018 DE 102018217910
(43) Veröffentlichungstag der Anmeldung: 25.08.2021
(73) Patentinhaber: ZF Friedrichshafen AG, 88046 Friedrichshafen (DE)
(72) Erfinder: DUETZ, Jan, 26434 Wangerland (DE); BRUNNER, Konstantin, 49401 Damme (DE); KUHLMANN, Ernst Willi Sven, 49448 Lemförde (DE)
(74) Vertreter: ZF Friedrichshafen AG
(86) Internationale Anmeldenummer: PCT/EP2019/074800
(87) Internationale Veröffentlichungsnummer: WO 2020/078643

(56) Entgegenhaltungen:
- EP-A1- 2 712 720
- DE-A1-102007 015 615

## Beschreibung

Die Erfindung betrifft ein Fahrzeugbauteil für ein Kraftfahrzeug mit einem Strukturteil und mit einer Umhüllung, wobei das Strukturteil zum Ausbilden der Umhüllung mindestens teilweise oder vollständig mit einem Material umspritzt und/oder umgossen ist, wobei an einer Haltestelle zum Halten des Strukturteils in einem Spritz- und/oder Gusswerkzeug eine Haltestellenabdeckung angeordnet ist, und die Haltestellenabdeckung einen Kontaktierungsbereich für ein Positionierungselement des Spritz- und/oder Gusswerkzeuges bereitstellt. Des Weiteren betrifft die Erfindung ein Verfahren zum Herstellen eines solchen Fahrzeugbauteils für ein Kraftfahrzeug, wobei das Strukturteil zum Ausbilden der Umhüllung mindestens teilweise oder vollständig mit einem Material umspritzt und/oder umgossen wird, wobei an einer Haltestelle zum Halten des Strukturteils in einem Spritz- und/oder Gusswerkzeug eine Haltestellenabdeckung angeordnet ist, und die Haltestellenabdeckung einen Kontaktierungsbereich für ein Positionierungselement des Spritz- und/oder Gusswerkzeuges bereitstellt.

Ein derartiges Fahrzeugbauteil bzw. Verfahren ist aus der EP 2 712 720 A1 bekannt.

Des Weiteren ist aus der DE 10 2007 015 615 A1 ein Fahrzeugbauteil bzw. Verfahren bekannt, wobeizum Umspritzen des Strukturteils dieses in einem Spritz- und/oder Gusswerkzeug positioniert und gehalten werden muss. Für die Positionierung bzw. das Halten des Strukturteils weist das Spritz- und/oder Gusswerkzeug in der Regel mehrere Positionierungselemente auf. Diese Positionierungselemente können als Positionierungsstifte ausgebildet sein, deren freien Enden an vorgegebenen Haltestellen an eine Fläche oder Oberfläche des Strukturteils gedrückt werden, wodurch das Strukturteil innerhalb einer Kavität des Spritz- und/oder Gusswerkzeuges und von deren Wände beabstandet gehalten werden kann. Anschließend kann das Umspritzen und/oder Umgießen des Strukturteils zum Herstellen der Umhüllung erfolgen.

Nachteilig ist hierbei, dass nach dem Umspritzen und/oder Umgießen die Positionierungselemente wieder von dem Strukturteil abgezogen werden, wodurch die Haltestellen des Strukturteils bzw. eine zugehörige Fläche oder Oberfläche des Strukturteils freigelegt sind bzw. ist. Somit kann beispielsweise ein durch die Umhüllung realisierter Korrosionsschutz im Bereich der Haltestellen unterbrochen sein. Hierdurch besteht die Gefahr einer unerwünschten lokalen Korrosion. Ein nachträgliches Verschließen der Umhüllung im Bereich der Haltestellen oder eine anderweitige Vor- oder Nachbehandlung zum Aufbringen eines Korrosionsschutzes im Bereich der Haltestellen ist in der Regel aufwendig und/oder verursacht unerwünschte Kosten.

Es ist die der Erfindung zugrunde liegende Aufgabe, ein Fahrzeugbauteil und/oder ein Verfahren der eingangs genannten Art derart weiterzuentwickeln, dass ein Verbleiben einer Unterbrechung der Umhüllung und/oder einer Unterbrechung eines Korrosionsschutzes im Bereich der Haltestelle vermieden ist. Vorzugsweise ist eine frei zugängliche Fläche und/oder Oberfläche des Strukturteils im Bereich der Haltestelle vermeidbar. Insbesondere soll eine alternative Ausführungsform bereitgestellt werden.

Die der Erfindung zu Grunde liegende Aufgabe wird mit einem Fahrzeugbauteil nach Anspruch 1 und mittels eines Verfahrens nach Anspruch 12 gelöst. Bevorzugte Weiterbildungen der Erfindung finden sich in den Unteransprüchen und in der nachfolgenden Beschreibung.

Das Fahrzeugbauteil ist zur Verwendung in einem Kraftfahrzeug, beispielsweise einem PKW oder NKW, vorgesehen. Hierbei weist das Fahrzeugbauteil ein Strukturteil auf. Insbesondere bestimmt das Strukturteil eine Grundform und/oder Kontur des Fahrzeugbauteils. Das Strukturteil kann formstabil, starr oder im Wesentlichen starr ausgebildet sein. Des Weiteren weist das Fahrzeugbauteil eine Umhüllung auf. Hierbei ist das Strukturteil mindestens teilweise oder, gemäß einer bevorzugten Ausführungsform, im Wesentlichen vollständig von der Umhüllung umhüllt und/oder umgeben. Insbesondere ist das Strukturteil in die Umhüllung mindestens teilweise oder vollständig eingebettet. Zum Ausbilden der Umhüllung wird das Strukturteil mit einem geeigneten Material umspritzt und/oder umgossen. Das Strukturteil weist mindestens eine Haltestelle, insbesondere mehrere Haltestellen, zum Halten des Strukturteils in einem Spritz- und/oder Gusswerkzeug auf. Erfindungsgemäß ist an der Haltestelle eine Haltestellenabdeckung angeordnet.

Hierbei ist von Vorteil, dass die Anordnung einer geeignet ausgebildeten Haltestellenabdeckung an der Haltestelle eine Abdeckung und/oder Versiegelung der Haltestelle ermöglicht. Hierdurch kann vermieden werden, dass eine Unterbrechung der Umhüllung und/oder eines Korrosionsschutzes im Bereich der Haltestelle verbleibt. Insbesondere ist mittels der Haltestellenabdeckung eine Fläche und/oder Oberfläche des Strukturteils im Bereich der Haltestelle, vorzugsweise dauerhaft, abgedeckt bzw. abdeckbar. Insbesondere ist die Haltestellenabdeckung als eine separate und/oder eigenständige Einrichtung oder als ein entsprechendes Bauteil ausgebildet. Vorzugsweise ist oder wird die Haltestellenabdeckung vorgefertigt. Somit kann die vorgefertigte Haltestellenabdeckung zum anschließenden Herstellen des Fahrzeugbauteils verwendet werden.

Vorzugsweise kontaktiert die Haltestellenabdeckung das Strukturteil und ist teilweise von dem Material der Umhüllung umspritzt und/oder umgossen. Somit kann die Haltestellenabdeckung unmittelbar an der Fläche und/oder Oberfläche des Strukturteils anliegen. Vorzugsweise definiert und/oder bestimmt die Fläche und/oder Oberfläche des Strukturteils, die von der Haltestellenabdeckung kontaktiert wird, die Haltestelle des Strukturteils zum Halten desselben in dem Spritz- und/oder Gusswerkzeug. Insbesondere ist die Haltestellenabdeckung aufgrund der Umspritzung und/oder Umgießung fest mit der Umhüllung und/oder mit dem Strukturteil verbunden. Vorzugsweise ist die Haltestellenabdeckung aufgrund eines Formschlusses, Stoffschlusses und/oder Kraftschlusses an dem Strukturteil und/oder der Umhüllung gehalten.

Nach einer weiteren Ausführungsform ist die Haltestellenabdeckung und die Umhüllung aus demselben Material gebildet. Das Material kann vor Korrosion schützend bzw. korrosionshindernd sein. Insbesondere ist die Haltestellenabdeckung und/oder die Umhüllung aus einem Kunststoff oder einem faserverstärkten Kunststoff gebildet.

Somit kann die Umhüllung und die Haltestellenabdeckung einen Korrosionsschutz für das Strukturteil realisieren. Insbesondere wenn das Strukturteil vollständig in die Umhüllung eingebettet und die Haltestellen zum Herstellen der Umhüllung jeweils mit einer Haltestellenabdeckung abgedeckt sind, kann das Strukturteil vollständig von Umwelteinflüssen abgeschirmt werden. Zudem kann die Umhüllung eine zusätzliche Verstärkung und/oder Versteifung des Fahrzeugbauteils bewirken.

Erfindungsgemäß stellt die Haltestellenabdeckung einen Kontaktierungsbereich für ein Positionierungselement des Spritz- und/oder Gusswerkzeuges bereit. Mittels des Positionierungselementes, insbesondere mehrerer Positionierungselemente, ist das Strukturteil in einer Kavität oder einem Hohlraum des Spritz- und/oder Gusswerkzeuges positionierbar bzw. haltbar. Hierbei kann das Strukturteil mittels des bzw. der Positionierelemente derart in der Kavität des Spritz- und/oder Gusswerkzeuges gehalten werden, so dass das Strukturteil von den Wänden der Kavität beabstandet ist und somit das Material zum Herstellen der Umhüllung zwischen die Wände und das Strukturteil eingespritzt und/oder eingegossen werden kann. Insbesondere ist das Positionierungselement als ein Positionierungsstift ausgebildet. Hierbei kann ein freies Ende des Positionierungsstiftes mit der Haltestellenabdeckung bzw. dem Kontaktierungsbereich der Haltestellenabdeckung zusammenwirken. Somit ist mittels der Haltestellenabdeckung vermeidbar, dass das Positionierungselement unmittelbar bzw. direkt an der Fläche und/oder Oberfläche des Strukturteils anliegt. Stattdessen ist die Haltestellenabdeckung zwischen dem Positionierungselement und dem Strukturteil angeordnet. Hierbei kann der Kontaktierungsbereich der Haltestellenabdeckung mit dem Positionierungselement und eine von dem Kontaktierungsbereich abgewandte Seite der Haltestellenabdeckung mit dem Strukturteil in Kontakt stehen. Insbesondere weist die Haltestellenabdeckung im Kontaktierungsbereich einen grö-ßeren Durchmesser auf als das freie Ende des Positionierungselementes. Hierdurch ist gewährleistet, dass das Material der Umhüllung die Haltestellenabdeckung derart umfassen kann, so dass die Haltestellenabdeckung nach dem Entfernen des Positionierungselementes mittels der Umhüllung an dem Strukturteil bzw. der Haltestelle gehalten ist.

Gemäß einer ersten Ausführung der Erfindung hat die Haltestellenabdeckung einen Aufnahmeabschnitt zum teilweisen Aufnehmen des Positionierungselementes. Mittels des Aufnahmeabschnittes kann die Haltestellenabdeckung an dem Positionierungselement angeordnet werden. Insbesondere ist der Aufnahmeabschnitt sacklochartig ausgebildet. Hierdurch kann die Haltestellenabdeckung auf ein freies Ende des Positionierungselementes aufgesteckt werden. Insbesondere ist eine Innenkontur des Aufnahmeabschnittes korrespondierend zu einer Außenkontur, vorzugsweise einem freien Ende, des Positionierungselementes ausgebildet. Das Positionierungselement oder der Positionierungsstift kann in Richtung einer Längsachse des Positionierungselementes bzw. des Positionierungsstiftes bewegbar und/oder einstellbar sein. In einem eingefahrenen Zustand des Positionierungselementes kann das Strukturteil in das Spritz- und/oder Gusswerkzeug eingelegt oder das Fahrzeugbauteil aus dem Spritz- und/oder Gusswerkzeug entnommen werden. In einem ausgefahrenen Zustand des Positionierungselementes wird das Strukturteil und/oder das Fahrzeugbauteil in dem Spritz- und/oder Gusswerkzeug gehalten. Nach dem Herstellen der Umhüllung und aufgrund des teilweisen Umspritzens und/oder Umgießens der Haltestellenabdeckung mit dem Material der Umhüllung verbleibt die Haltestellenabdeckung an dem Fahrzeugbauteil, wenn das Positionierungselement nach dem Herstellen der Umhüllung und zum Entnehmen des Fahrzeugbauteils aus dem Spritz- und/oder Gusswerkzeug eingefahren wird.

Vorzugsweise liegt die Haltestellenabdeckung mindestens einseitig an der Fläche und/oder Oberfläche des Strukturteils an. Insbesondere liegt die Haltestellenabdeckung an einer dem Positionierungselement zugewandten Seite oder Fläche des Strukturteils an. Abhängig von der konkreten Ausführung der Haltestellenabdeckung und/oder der Haltestelle des Strukturteils kann die Haltestellenabdeckung vollflächig oder teilflächig an der Fläche und/oder Oberfläche des Strukturteils anliegen.

Gemäß einer Weiterbildung ist die Haltestellenabdeckung einteilig ausgebildet. Eine einteilige Ausbildung der Haltestellenabdeckung ermöglicht eine besonders kostengünstige Herstellung und/oder Handhabbarkeit. Alternativ kann die Haltestellenabdeckung mehrteilig oder zweiteilig ausgebildet sein. Vorzugsweise ist eine zweiteilig ausgebildete Haltestellenabdeckung mittels zweier Gleichteile realisiert. Bei einer mehrteiligen oder zweiteiligen Ausbildung der Haltestellenabdeckung können die Teile der Haltestellenabdeckung mittels einer Schnapp- und/oder Rastverbindung miteinander verbunden werden. Bei einer zweiteiligen Haltestellenabdeckung kann diese ein erstes Abdeckelement und ein zweites Abdeckelement aufweisen. Zum Ausbilden der Haltestellenabdeckung können das erste Abdeckelement und das zweite Abdeckelement mittels der Schnapp- und/oder Rastverbindung miteinander verbunden sein.

Gemäß einer weiteren Ausführung der Erfindung hat das Strukturteil eine Öffnung. Insbesondere ist die Öffnung im Bereich der Haltestelle des Strukturteils angeordnet. Die Haltestellenabdeckung erstreckt sich durch die Öffnung des Strukturteils.

Die Öffnung kann als ein Kreisloch oder als ein Langloch realisiert sein. Vorzugsweise wirkt die Haltestellenabdeckung mit zwei voneinander abgewandten Seiten oder Flächen des Strukturteils im Bereich der Öffnung zusammen. Aufgrund dessen, dass sich die Haltestellenabdeckung durch die Öffnung des Strukturteils hindurch erstreckt, kann die Haltestellenabdeckung beispielsweise sowohl mit einer Außenseite des Strukturteils als auch mit einer von der Außenseite abgewandt angeordneten Innenseite des Strukturteils zusammenwirken.

Gemäß der weiteren Ausführung der Erfindung weist die Haltestellenabdeckung mindestens einen Schnapp- und/oder Rastabschnitt zum Herstellen einer formschlüssigen Verbindung der Haltestellenabdeckung mit dem Strukturteil auf. Mittels des Schnapp- und/oder Rastabschnittes kann die Haltestellenabdeckung in der Öffnung des Strukturteils angeordnet, gehalten und/oder festgesetzt sein. Insbesondere ist mittels der formschlüssigen Verbindung des Schnapp- und/oder Rastabschnittes eine Verliersicherung für die Haltestellenabdeckung an dem Strukturteil realisiert. Hierdurch kann die Haltestellenabdeckung an der Haltestelle bzw. in der Öffnung des Strukturteils bereits vor dem Anordnen des Strukturteils in dem Spritz- und/oder Gusswerkzeug verliersicher angeordnet werden. Hierdurch ist die Handhabbarkeit und/oder die Prozesssicherheit verbessert. Der Schnapp- und/oder Rastabschnitt der Haltestellenabdeckung kann einen, zwei oder mehrere Rasthaken aufweisen. Insbesondere hat der Schnapp- und/oder Rastabschnitt zwei spiegelsymmetrisch zueinander angeordnete Rasthaken. Vorzugsweise ist der Schnapp- und/oder Rastabschnitt oder der Rasthaken elastisch biegbar ausgebildet.

Nach einer weiteren Ausführungsform ist das Strukturteil aus einem Metall oder Blech gebildet. Somit kann das Fahrzeugbauteil als ein Kunststoff-Metall-Hybrid-Bauteil realisiert sein. Hierbei kann die Umhüllung zusammen mit der mindestens einen Haltestellenabdeckung einen Korrosionsschutz für das metallene Strukturteil realisieren. Das Fahrzeugbauteil kann als ein Pedal, ein Fahrwerkbauteil, insbesondere ein Lenker oder eine Spurstange, ausgebildet sein.

Bei dem Verfahren zum Herstellen eines, insbesondere erfindungsgemäßen Fahrzeugbauteils, wird das Strukturteil zum Ausbilden der Umhüllung mindestens teilweise oder vollständig oder im Wesentlichen vollständig mit einem Material umspritzt und/oder umgossen. Hierbei wird erfindungsgemäß an der Haltestelle zum Halten des Strukturteils in dem Spritz- und/oder Gusswerkzeug die Haltestellenabdeckung angeordnet, und stellt die Haltestellenabdeckung einen Kontaktierungsbereich für ein Positionierungselement des Spritz- und/oder Gusswerkzeuges bereit. Gemäß der ersten Ausführung der Erfindung wird das Positionierungselement teilweise in einem Aufnahmeabschnitt der Haltestellenabdeckung aufgenommen. Gemäß der weiteren Ausführung der Erfindung wird mittels mindestens eines Schnapp- und/ oder Rastabschnittes der Haltestellenabdeckung, die sich durch eine Öffnung des Strukturteils erstreckt, eine formschlüssige Verbindung der Haltestellenabdeckung mit dem Strukturteil hergestellt.

Insbesondere wird die Haltestellenabdeckung zum Halten des Strukturteils in dem Spritz- und/oder Gusswerkzeug zwischen dem Strukturteil und dem Positionierungselement des Spritz- und/oder Gusswerkzeugs angeordnet. Hierdurch wird vermieden, dass das Positionierungselement unmittelbar an der Fläche und/oder Oberfläche des Strukturteils anliegt und nach dem Entfernen des Positionierungselementes eine unabgedeckte Haltestelle verbleibt.

Stattdessen kann die Haltestellenabdeckung teilweise von dem Material der Umhüllung umspritzt und/oder umgossen werden, wodurch die Haltestellenabdeckung fest mit der Umhüllung und/oder dem Strukturteil verbunden wird. Hierdurch kann die Haltestellenabdeckung nach dem Entfernen des Positionierungselementes an dem Strukturteil bzw. dem Fahrzeugbauteil verbleiben. Mittels der Haltestellenabdeckung kann die Haltestelle des Strukturteils abgedeckt werden. Somit kann eine Unterbrechung eines Korrosionsschutzes für das Strukturteil vermieden werden.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Ansicht eines erfindungsgemäßen Fahrzeugbauteils,
- Fig. 2: eine perspektivische Ansicht eines Strukturteils für ein erfindungsgemäßes Fahrzeugbauteil gemäß Fig. 1,
- Fig. 3: eine perspektivische Ansicht des Strukturteils gemäß Fig. 2 mit ersten Haltestellenabdeckungen an Haltestellen des Strukturteils,
- Fig. 4: einen Ausschnitt einer geschnittenen Seitenansicht einer zweiten Haltestellenabdeckung an einem Strukturteil zum Ausbilden eines erfindungsgemäßen Fahrzeugbauteils,
- Fig. 5: einen Ausschnitt einer geschnittenen Seitenansicht einer dritten Haltestellenabdeckung an einem Strukturteil zum Ausbilden eines erfindungsgemäßen Fahrzeugbauteils,
- Fig. 6: einen Ausschnitt einer geschnittenen Seitenansicht einer vierten Haltestellenabdeckung an einem Strukturteil zum Ausbilden eines erfindungsgemäßen Fahrzeugbauteils,
- Fig. 7: einen Ausschnitt einer zweifach geschnittenen Seitenansicht einer fünften Haltestellenabdeckung an einem Strukturteil zum Ausbilden eines erfindungsgemäßen Fahrzeugbauteils,
- Fig. 8: einen Ausschnitt einer zweifach geschnittenen Seitenansicht einer sechsten Haltestellenabdeckung an einem Strukturteil zum Ausbilden eines erfindungsgemäßen Fahrzeugbauteils, und
- Fig. 9: einen Ausschnitt einer geschnittenen Seitenansicht einer weiteren Haltestellenabdeckung an einem Strukturteil zum Ausbilden eines erfindungsgemäßen Fahrzeugbauteils.

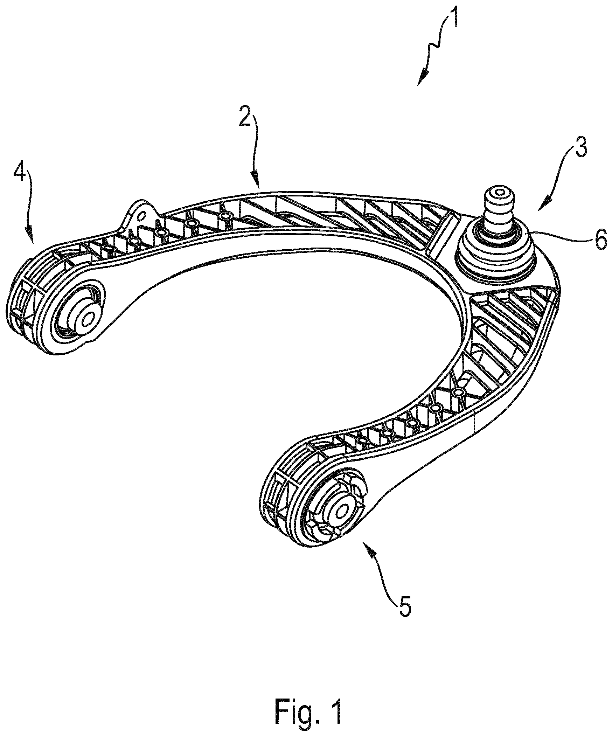

Figur 1 zeigt eine perspektivische Ansicht eines erfindungsgemäßen Fahrzeugbauteils 1. Bei diesem Ausführungsbeispiel ist das Fahrzeugbauteil 1 als ein Fahrwerkbauteil, nämlich ein Lenker bzw. Dreipunktlenker ausgebildet. Das Fahrzeugbauteil 1 hat eine Umhüllung 2. Die Umhüllung 2 ist hier aus einem Kunststoff gebildet. In die Umhüllung 2 ist ein hier nicht näher erkennbares Strukturteil eingebettet. Bei diesem Ausführungsbeispiel wird das Strukturteil von der Umhüllung 2 im Wesentlichen vollständig umhüllt. Hierbei dient die Umhüllung 2 als Korrosionsschutz sowie gleichzeitig als eine Versteifung und/oder Verstärkung für das Strukturteil.

Bei diesem Ausführungsbeispiel weist das Fahrzeugbauteil 1 drei Gelenke 3, 4, 5 auf. Hierbei ist das Gelenk 3 als ein Kugelzapfengelenk ausgebildet, das einen Dichtungsbalg 6 aufweist. Die Gelenke 4, 5 sind hier beispielhaft als Kugelhülsengelenke oder alternativ als Gummilager ausgebildet.

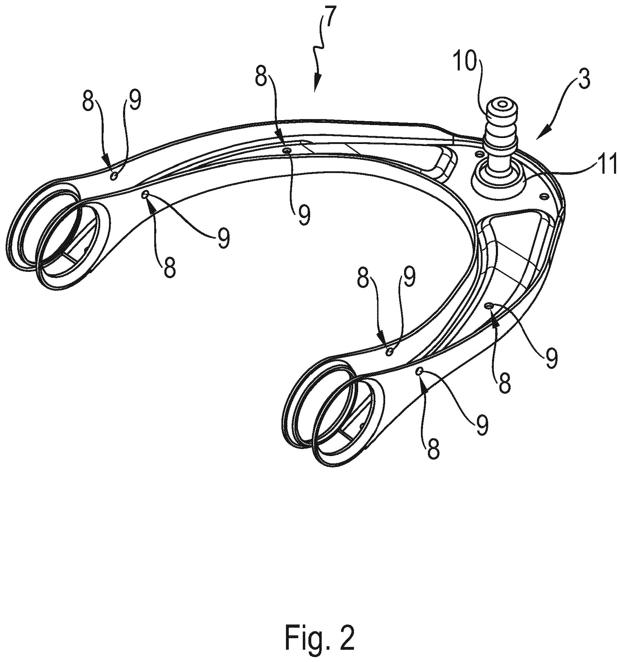

Figur 2 zeigt eine perspektivische Seitenansicht eines Strukturteils 7 für das erfindungsgemäße Fahrzeugbauteil 1 gemäß Figur 1. Das Strukturteil 7 ist bei diesem Ausführungsbeispiel aus einem Metall, nämlich einem Blech, gebildet. Hierbei gibt das Strukturteil 7 die Grundform bzw. Kontur des Fahrzeugbauteils 1 gemäß Figur 1 vor.

Das Strukturteil 7 weist mehrere Haltestellen 8 auf. Die Haltestellen dienen zum Positionieren und Halten des Strukturteils 7 in einem hier nicht näher dargestellten Spritz- und/oder Gusswerkzeug.

Bei diesem Ausführungsbeispiel weisen die Haltestellen 8 jeweils eine Öffnung 9 auf. Hier sind die Öffnungen 9 beispielhaft als Kreislöcher ausgebildet. Alternativ können einzelne oder alle Öffnungen 9 als Langlöcher realisiert sein.

Bei diesem Ausführungsbeispiel ist das Gelenk 3 mit einem Gelenkzapfen 10 und einem Gelenkgehäuse 11 bereits mit dem Strukturteil 7 verbunden bzw. in dieses eingepresst.

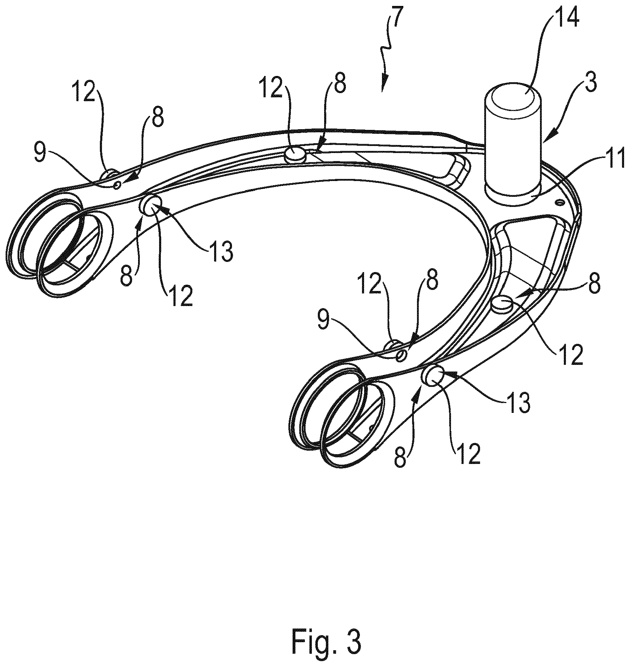

Figur 3 zeigt eine perspektivische Ansicht des Strukturteils 7 gemäß Figur 2 mit ersten Haltestellenabdeckungen 12 an den Haltestellen 8 des Strukturteils 7. Bei diesem Ausführungsbeispiel sind die Haltestellenabdeckungen 12 im Wesentlichen pilzkopfartig bzw. mit einem T-förmigen Querschnitt ausgebildet. Hierbei sind die Haltestellenabdeckungen 12 teilweise in die Öffnungen 9 der Haltestelle 8 eingesteckt. Die Haltestellenabdeckungen 12 sind bei diesem Ausführungsbeispiel aus demselben Material wie die Umhüllung 2 gemäß Figur 1 gebildet.

Des Weiteren weisen die Haltestellenabdeckungen 12 jeweils einen Kontaktierungsbereich 13 für ein hier nicht näher dargestelltes Positionierungselement eines Spritz- und/oder Gusswerkzeuges auf. Bei diesem Ausführungsbeispiel sind die Kontaktierungsbereiche 13 als im Wesentlichen ebene, kreisscheibenartige Flächen ausgebildet. Für eine bessere Übersichtlichkeit sind nicht sämtliche Kontaktierungsbereiche 13 mit einem Bezugszeichen versehen.

Des Weiteren ist bei diesem Ausführungsbeispiel über den Gelenkzapfen 10 gemäß Figur 2 eine Abdichthülse 14 gestülpt. Die Abdichthülse 14 liegt auf dem Gelenkgehäuse 11 auf. Mittels der Abdichthülse 14 wird beim Umspritzen und/oder Umgießen des Strukturteils 7 zum Herstellen der Umhüllung 2 gemäß Figur 1 ein Eindringen des Materials der Umhüllung 2 in das Gelenk 3 verhindert. Die Abdichthülse 14 kann wie das bzw. die Positionierungselemente Bestandteil des hier nicht näher dargestellten Spritz- und/oder Gusswerkzeuges sein.

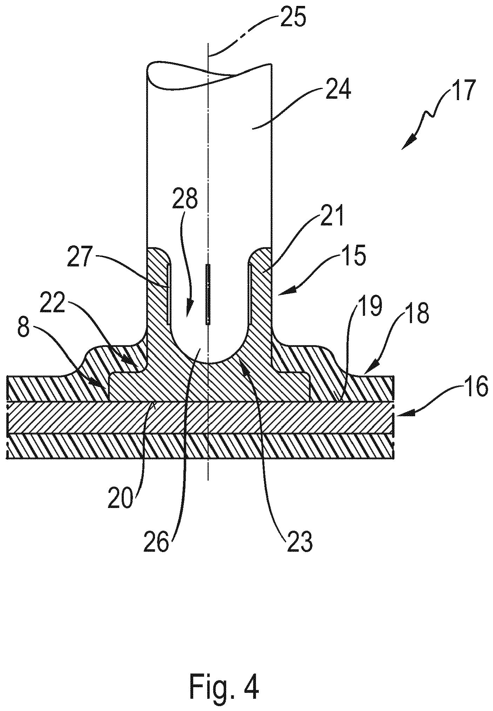

Figur 4 zeigt einen Ausschnitt einer geschnittenen Seitenansicht einer zweiten Haltestellenabdeckung 15 an einem Strukturteil 16 zum Ausbilden eines erfindungsgemäßen Fahrzeugbauteils 17. Das Strukturteil 16 ist hier ebenfalls aus einem Metall bzw. Blech gebildet. Des Weiteren weist das Fahrzeugbauteil 17 eine Umhüllung 18 auf. Die Umhüllung 18 ist bei diesem Ausführungsbeispiel aus einem Kunststoff gebildet.

Die Haltestellenabdeckung 15 liegt an einer Haltestelle 8 des Strukturteils 16 flächig auf einer Seite, Fläche bzw. Oberfläche 19 an. Im Unterschied zum Strukturteil 7 gemäß Figuren 2 und 3 weist die Haltestelle 8 des Strukturteils 16 keine Öffnung 9 auf.

Die Haltestellenabdeckung 15 ist im Wesentlichen pilzkopfartig ausgebildet. Hierbei liegt eine Stirnseite 20 der Haltestellenabdeckung 15 auf der Fläche 19 auf bzw. an. Auf einer von der Stirnseite 20 bzw. von dem Strukturteil 16 abgewandten Seite weist die Haltestellenabdeckung 15 einen Aufnahmeabschnitt 21 auf. Der Aufnahmeabschnitt 21 weist eine Vertiefung auf, wodurch der Aufnahmeabschnitt 21 sacklochartig ausgebildet ist. Ein Außendurchmesser des Aufnahmeabschnittes 21 ist geringer als ein Bereich der Haltestellenabdeckung 15 mit der Stirnseite 20. Hierdurch ist ein stufenartiger Versatz 22 bzw. Rücksprung gebildet. Die Haltestellenabdeckung 15 ist von der Umhüllung 18 teilweise umschlossen. Bei diesem Ausführungsbeispiel überdeckt die Umhüllung 18 den Versatz 22. Hierdurch ist die Haltestellenabdeckung 15 mittels der Umhüllung 18 fest und dauerhaft an der Haltestelle 8 mit dem Strukturteil 16 bzw. dem Fahrzeugbauteil 17 verbunden.

Der Aufnahmeabschnitt 21 dient zum Bereitstellen eines Kontaktbereiches 23 für ein Positionierungselement 24. Das Positionierungselement 24 ist Bestandteil eines hier nicht näher dargestellten Spritz- und/oder Gusswerkzeuges. Hierbei ist das Positionierungselement 24 in Richtung einer Längsachse 25 des Positionierungselementes 24 verschiebbar und in mindestens zwei unterschiedlichen Positionen haltbar. Hier ist das Positionierungselement 24 in einer ausgefahrenen Position dargestellt, in der das Positionierungselement mit der Haltestellenabdeckung 15 zusammenwirkt und die Haltestellenabdeckung 15 an der Fläche 19 des Strukturteils 16 anliegt. In einer hier nicht näher dargestellten eingefahrenen Position des Positionierungselementes 24 rückt das Positionierungselement 24 derart aus dem Aufnahmeabschnitt 21 heraus, so dass das Fahrzeugbauteil 17 aus dem Spritz- und/oder Gusswerkzeug entnommen werden kann.

Das Positionierungselement 24 ist bei diesem Ausführungsbeispiel als ein Positionierungsstift ausgebildet. Hierbei weist das Positionierungselement 24 ein freies Ende 26 auf, dessen Außenkontur korrespondierend zu der Innenkontur des Aufnahmeabschnittes 21 ausgebildet ist. Bei diesem Ausführungsbeispiel weist das Positionierungselement 24 an seinem freien Ende 26 axial zur Längsachse 25 ausgerichtete Rippen 27 auf. Hier sind die Rippen 27 beispielhaft als Quetschrippen ausgebildet. Mehrere Rippen 27 sind gleichmäßig verteilt um einen Außenumfang des freien Endes 26 herum verteilt angeordnet. Die Rippen 27 sind hier zur besseren Darstellbarkeit schematisch dargestellt. Tatsächlich wird das Material der Rippen 27 beim Einführen des Positionierungselementes 24 bzw. des freien Endes 26 in den hohlzylindrischen Aufnahmeabschnitt 21 verdrängt bzw. verquetscht. Hierdurch kann ein unerwünschtes Abfallen der Haltestellenabdeckung 15 von dem Positionierungselement 24 vermieden werden. Dies ist insbesondere dann von Vorteil, wenn zunächst die Haltestellenabdeckung 15 auf das Positionierungselement 24 aufgesteckt wird und erst anschließend das Positionierungselement 24 zusammen mit der Haltestellenabdeckung 15 an die Haltestelle 8 verfahren wird.

Mittels des Aufnahmeabschnittes 21 kann die Haltestellenabdeckung 15 zunächst auf das freie Ende 26 aufgesetzt werden. Mittels der Rippen 27 ist die Haltestellenabdeckung 15 hinreichend sicher an dem Positionierungselement 24 gehalten. Anschließend kann das Strukturteil 16 in das Spritz- und/oder Gusswerkzeug eingesetzt und mittels insbesondere mehrerer Positionierungselemente 24 in einer Kavität des Spritz- und/oder Gusswerkzeuges positioniert und gehalten werden. Hierbei werden zugleich die Haltestellenabdeckungen 15 an den Haltestellen 8 des Strukturteils 16 positioniert. Anschließend erfolgt die Herstellung der Umhüllung 18, wodurch die Haltestellenabdeckung 15 mit dem Strukturteil 16 verbunden und an diesem gehalten wird. Nach dem Herstellen der Umhüllung 18 fährt das Positionierungselement 24 in eine Einfuhrposition zurück und die Haltestellenabdeckung 15 verbleibt an dem Fahrzeugbauteil 17.

Zum Erleichtern des Herausfahrens des Positionierungselementes 24 bzw. des freien Endes 26 aus dem Aufnahmeabschnitt 21 weist das freie Ende 26 bei diesem Ausführungsbeispiel mehrere Entformungsschrägen 28 auf. Bei diesem Ausführungsbeispiel ist jeweils eine Entformungsschräge 28 zwischen zwei benachbarten Rippen 27 am Außenumfang des freien Endes 26 angeordnet.

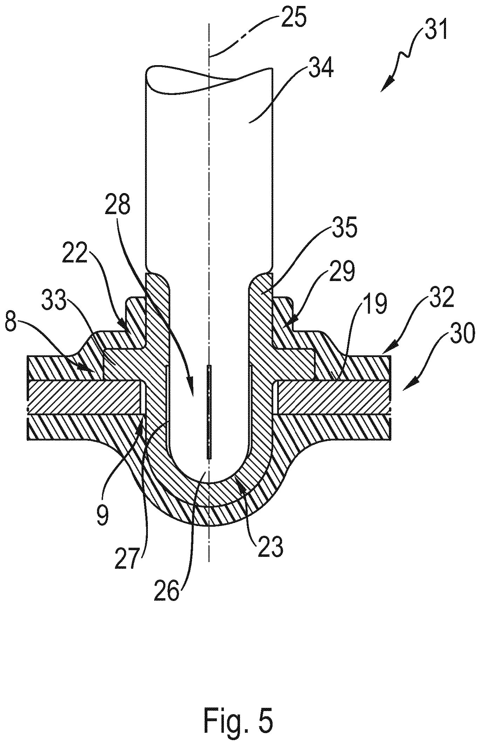

Figur 5 zeigt einen Ausschnitt einer geschnittenen Seitenansicht einer dritten Haltestellenabdeckung 29 an einem Strukturteil 30 und zum Ausbilden eines erfindungsgemäßen Fahrzeugbauteils 31. Das Strukturteil 30 ist aus einem Blech gebildet und von einer Umhüllung 32 aus einem Kunststoff umgeben. An einer Haltestelle 8 des Strukturteils 30 ist eine Öffnung 9 vorgesehen. Die Haltestellenabdeckung 29 erstreckt sich durch die Öffnung 9 hindurch. Die Haltestellenabdeckung 29 weist einen ringartigen Steg 33 auf. Der ringartige Steg 33 liegt einseitig auf einer Fläche 19 des Strukturteils 30 an. Hierdurch wird eine Einführbewegung eines Positionierungselementes 34 zum Einführen der Haltestellenabdeckung 29 in die Öffnung 9 begrenzt. Das Positionierungselement 34 ist ähnlich dem Positionierungselement 24 gemäß Figur 4 aufgebaut.

Das Positionierungselement 34 weist entsprechend einen Aufnahmeabschnitt 35 auf, der bei diesem Ausführungsbeispiel sacklochartig ausgebildet ist. Das freie Ende 26 des Positionierungselementes 34 ist korrespondierend zum Aufnahmeabschnitt 35 ausgebildet. Insoweit wird auch auf die vorangegangene Beschreibung gemäß Figur 4 verwiesen.

Der Steg 33 bildet ähnlich wie bei der Ausführung gemäß Figur 4 einen Versatz 22 bzw. Rücksprung, der stufenartig ausgebildet ist. Der Steg 33 und der Versatz 22 sowie der sich durch die Öffnung 9 hindurch erstreckende Abschnitt der Haltestellenabdeckung 29 ist von dem Material der Umhüllung 32 umspritzt bzw. umgossen. Hierdurch ist die Haltestellenabdeckung 29 an der Haltestelle 8 bzw. in der Öffnung 9 dauerhaft fixiert.

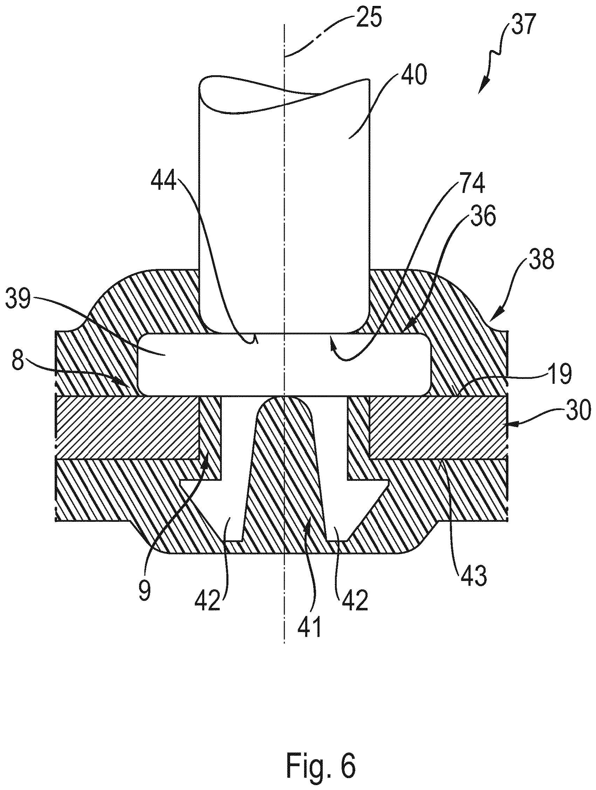

Figur 6 zeigt einen Ausschnitt einer geschnittenen Seitenansicht einer vierten Haltestellenabdeckung 36 an einem Strukturteil 30 zum Ausbilden eines erfindungsgemäßen Fahrzeugbauteils 37. Das metallene Strukturteil 30 ist in eine Umhüllung 38 aus einem Kunststoff eingebettet. Die Haltestellenabdeckung 36 ist im Wesentlichen pilzkopfartig ausgebildet. Hierbei liegt ein Plattenabschnitt 39 der Haltestellenabdeckung 36 an der Fläche 19 des Strukturteils 30 an. Somit wird eine Einführbewegung zum Einführen der Haltestellenabdeckung 36 in die Öffnung 9 des Strukturteils 30 mittels des Plattenabschnittes 39 begrenzt.

Die Haltestellenabdeckung 36 weist einen Schnapp- und/oder Rastabschnitt 41 auf, der sich ausgehend von dem Plattenabschnitt 39 durch die Öffnung 9 hindurch erstreckt. Der Schnapp- und/oder Rastabschnitt 41 weist bei diesem Ausführungsbeispiel zwei Rasthaken 42 auf. Die beiden Rasthaken 42 sind spiegelsymmetrisch zueinander und/oder zu der Längsachse 25 ausgebildet. Die Rasthaken 42 sind elastisch und radial nach innen in Bezug zu der Längsachse 25 biegbar ausgebildet. In einem von dem Plattenabschnitt 39 oder der Fläche 19 abgewandten Bereich ragen die Rasthaken 42 über die Öffnung 9 hinaus. Die Rasthaken 42 wirken, insbesondere direkt oder mittelbar, mit einer von dem Plattenabschnitt 39, der Fläche 19 oder einem Positionierungselement 40 abgewandten Seite 43 des Strukturteils 30 zusammen. Die Rasthaken 42 sind vollständig in dem Material der Umhüllung 38 eingebettet. Des Weiteren ist ein äußerer Rand des Plattenabschnitts 39 in dem Material der Umhüllung 38 eingebettet.

Eine Stirnfläche 44 des Positionierungselementes 40 liegt an einem von dem Schnapp- und/oder Rastabschnitt 41 abgewandten Kontaktierungsbereich 74 an, der hier mittels einer Stirnseite des Plattenabschnittes 39 bereits gestellt ist.

Mittels der Schnapp- und/oder Rastabschnitte 41 kann die Haltestellenabdeckung 36 in der Öffnung 9 des Strukturteils 30 vormontiert werden. Hierbei realisiert der Schnapp- und/oder Rastabschnitt 41 zugleich eine Verliersicherung für die Haltestellenabdeckung 36 an dem Strukturteil 30.

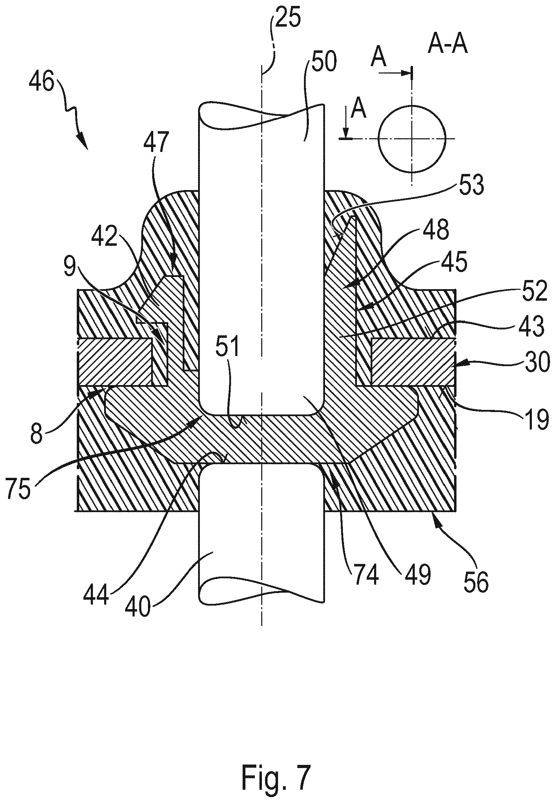

Figur 7 zeigt einen Ausschnitt einer zweifach geschnittenen Seitenansicht einer fünften Haltestellenabdeckung 45 an einem Strukturteil 30 zum Ausbilden eines erfindungsgemäßen Fahrzeugbauteils 46. Die Haltestellenabdeckung 45 ist ähnlich der Haltestellenabdeckung 36 gemäß Figur 6 ausgebildet. Insoweit wird auch auf die vorangegangene Beschreibung verwiesen.

Die Figur gemäß 7 zeigt unter Berücksichtigung der Teilfigur A-A linksseitig der Längsachse 25 einen ersten Teilquerschnitt und rechtsseitig der Längsachse 25 einen zu dem ersten Teilquerschnitt rechtwinklig angeordneten zweiten Teilquerschnitt der Haltestellenabdeckung 45. Die jeweils andere, hier nicht dargestellte Seite des linksseitigen bzw. rechtsseitigen Teilquerschnittes ist spiegelsymmetrisch zur Längsachse 25 zum ersten linksseitigen Teilquerschnitt bzw. zum zweiten rechtsseitigen Teilquerschnitt ausgebildet.

Somit weist die Haltestellenabdeckung 45 einen Schnapp- und/oder Rastabschnitt 47 auf, der ähnlich dem Schnapp- und/oder Rastabschnitt 41 gemäß Figur 6 ausgebildet ist. Entsprechend weist der Schnapp- und/oder Rastabschnitt 47 zwei spiegelsymmetrisch zueinander angeordnete Rasthaken 42 auf. Abweichend zu dem Schnapp- und/oder Rastabschnitt 41 gemäß Figur 6 hat der Schnapp- und/oder Rastabschnitt 47 gemäß der Figur 7 jedoch einen Aufnahmeabschnitt 48 zum Aufnehmen eines freien Endes 49 eines weiteren Positionierungselementes 50. Der Aufnahmeabschnitt 48 ist im Wesentlichen sacklochartig ausgebildet und das freie Ende 49 des weiteren Positionierungselementes 50 ist zumindest im Bereich einer Stirnfläche 51 des weiteren Positionierungselementes 50 korrespondierend zu dem Aufnahmeabschnitt 48 ausgebildet und in diesem aufgenommen. Somit liegt das freie Ende 49 an einem weiteren Kontaktierungsbereich 75 der Haltestellenabdeckung 45 an. Hierbei sind die Kontaktierungsbereiche 74 und 75 an zwei voneinander abgewandten Seiten der Haltestellenabdeckung angeordnet.

Die Rasthaken 42 sind radial zur Längsachse 25 von dem weiteren Positionierungselement 50 beabstandet. Hierdurch können die Rasthaken 42 auch bei einem bereits in den Aufnahmeabschnitt 48 eingeführten weiteren Positionierungselement 50 und beim Einstecken der Haltestellenabdeckung 45 in die Öffnung 9 elastisch radial nach innen in Richtung des weiteren Positionierungselementes 50 verbogen werden.

Des Weiteren weist der Aufnahmeabschnitt 48 gemäß dem rechtsseitigen Teilquerschnitt einen Steg 52 auf, der am Außenumfang des weiteren Positionierungselementes 50 anliegt. Der Steg 52 hat an seinem freien Ende eine Schräge 53, die ein Einführen des freien Endes 49 in den Aufnahmeabschnitt 48 erleichtert. Die Schräge 53 ist hierzu schräg radial nach innen zur Längsachse 25 gerichtet.

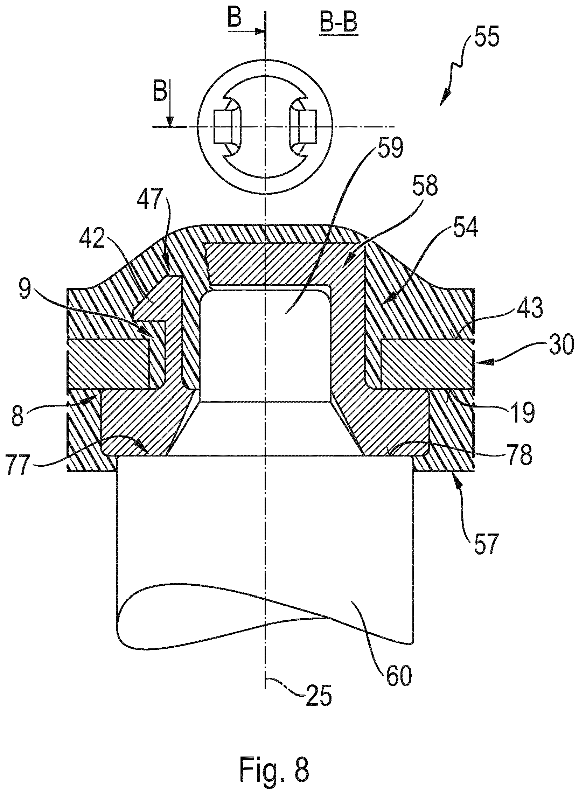

Figur 8 zeigt einen Ausschnitt einer zweifach geschnittenen Seitenansicht einer sechsten Haltestellenabdeckung 54 an einem Strukturteil 30 zum Ausbilden eines erfindungsgemäßen Fahrzeugbauteils 55. Das Fahrzeugbauteil 55 weist eine Umhüllung 57 aus einem Kunststoff auf, in die das metallene Strukturteil 30 eingebettet ist.

Die Figur 8 zeigt unter Berücksichtigung der Teilfigur B-B linksseitig der Längsachse 25 einen ersten Teilquerschnitt und rechtsseitig der Längsachse 25 einen rechtwinklig zum ersten Teilquerschnitt angeordneten zweiten Teilquerschnitt. Hierbei ist die jeweils fehlende Darstellung des rechtsseitigen bzw. linksseitigen Querschnitts des ersten Teilquerschnitts bzw. des zweiten Teilquerschnitts spiegelsymmetrisch zu dem ersten Teilquerschnitt bzw. zu dem zweiten Teilquerschnitt ausgebildet.

Somit weist die Haltestellenabdeckung 57 einen Schnapp- und/oder Rastabschnitt 47 mit zwei Rasthaken 42 im Sinne von Figur 7 auf. Insoweit wird auch auf die vorangegangene Beschreibung verwiesen. Gemäß dem rechtsseitigen Teilquerschnitt weist die Haltestellenabdeckung 54 einen im Querschnitt im Wesentlichen U-förmigen Aufnahmeabschnitt 58 zum Aufnehmen eines freien Endes 59 eines Positionierungselementes 60 auf. Hierbei ist der Aufnahmeabschnitt 58 im Wesentlichen korrespondierend zu dem freien Ende 59 ausgebildet. Bei diesem Ausführungsbeispiel dient das freie Ende 59 im Wesentlichen zur radialen Positionierung der Haltestellenabdeckung 57. In axialer Richtung zur Längsachse 25 weist die Haltestellenabdeckung auf einer von dem Aufnahmeabschnitt 58 abgewandten Seite einen Kontaktierungsbereich 77 auf, an dem eine Ringfläche 78 des Positionierungselementes anliegt.

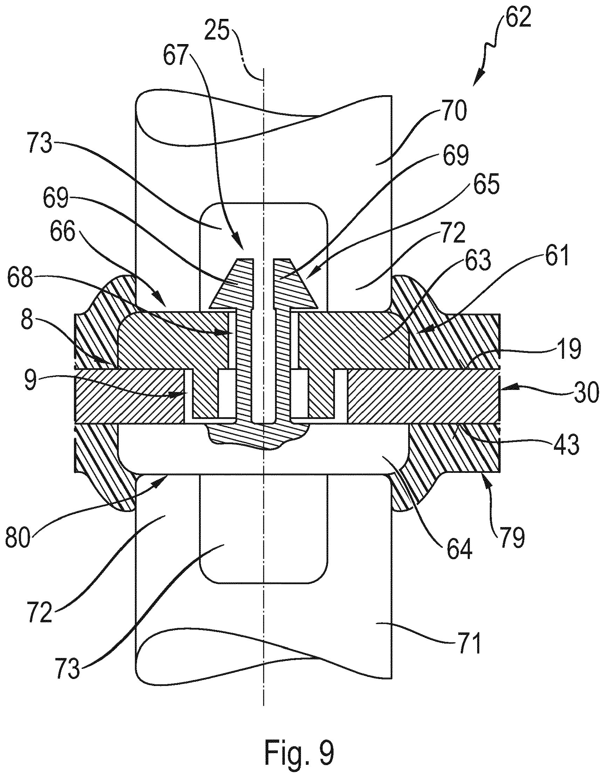

Figur 9 zeigt einen Ausschnitt einer geschnittenen Seitenansicht einer weiteren Haltestellenabdeckung 61 an einem Strukturteil 30 zum Ausbilden eines erfindungsgemäßen Fahrzeugbauteils 62. Das Fahrzeugbauteil 62 weist eine Umhüllung 79 aus einem Kunststoff auf, in die das metallene Strukturteil 30 eingebettet ist.

Die Haltestellenabdeckung 61 ist aus einem ersten Abdeckelement 63 und einem zweiten Abdeckelement 64 gebildet. Das erste Abdeckelement 63 und das zweite Abdeckelement 64 sind mittels einer Schnapp- und/oder Rastverbindung 65 miteinander verbunden. Bei diesem Ausführungsbeispiel ist das erste Abdeckelement 63 im Wesentlichen ringartig ausgebildet. Des Weiteren ist das zweite Abdeckelement 64 im Wesentlichen pilzkopfartig ausgebildet, wobei sich ein Schnapp- und/oder Rastabschnitt 67 des zweiten Abdeckelementes 64 durch die Öffnung 9 und durch einen Durchbruch 68 des ersten Abdeckelementes 63 hindurch erstreckt. Der Schnapp- und/oder Rastabschnitt 67 weist zwei spiegelsymmetrisch zueinander ausgebildete Rasthaken 69 auf.

Zum Halten und Positionieren des Strukturteils 30 in einem hier nicht näher dargestellten Spritz- und/oder Gusswerkzeug weist dieses zwei Positionierungselemente 70, 71 auf. Die beiden Positionierungselemente 70, 71 sind spiegelsymmetrisch zueinander angeordnet bzw. ausgebildet. Hierbei liegt das Positionierungselement 70 an einem ersten Kontaktierungsbereich 66 des ersten Abdeckelementes 63 und das Positionierungselement 71 an einem zweiten Kontaktierungsbereich 80 des zweiten Abdeckelementes 64 an. Die Positionierungselemente 70, 71 weisen im Bereich ihres jeweils freien Endes 72 eine Vertiefung 73 auf. Die Vertiefung 73 stellt einen hinreichenden Freiraum für die Rasthaken 69 bereit.

### Bezugszeichen

- 1: Fahrzeugbauteil
- 2: Umhüllung
- 3: Gelenk
- 4: Gelenk
- 5: Gelenk
- 6: Dichtungsbalg
- 7: Strukturteil
- 8: Haltestelle
- 9: Öffnung
- 10: Gelenkzapfen
- 11: Gelenkgehäuse
- 12: Haltestellenabdeckung
- 13: Kontaktierungsbereich
- 14: Abdichthülse
- 15: Haltestellenabdeckung
- 16: Strukturteil
- 17: Fahrzeugbauteil
- 18: Umhüllung
- 19: Fläche
- 20: Stirnseite
- 21: Aufnahmeabschnitt
- 22: Versatz
- 23: Kontaktierungsbereich
- 24: Positionierungselement
- 25: Längsachse
- 26: freies Ende
- 27: Rippe
- 28: Entformungsschräge
- 29: Haltestellenabdeckung
- 30: Strukturteil
- 31: Fahrzeugbauteil
- 32: Umhüllung
- 33: Steg
- 34: Positionierungselement
- 35: Aufnahmeabschnitt
- 36: Haltestellenabdeckung
- 37: Fahrzeugbauteil
- 38: Umhüllung
- 39: Plattenabschnitt
- 40: Positionierungselement
- 41: Schnapp- und/oder Rastabschnitt
- 42: Rasthaken
- 43: Seite
- 44: Stirnfläche
- 45: Haltestellenabdeckung
- 46: Fahrzeugbauteil
- 47: Schnapp- und/oder Rastabschnitt
- 48: Aufnahmeabschnitt
- 49: freies Ende
- 50: weiteres Positionierungselement
- 51: Stirnfläche
- 52: Steg
- 53: Schräge
- 54: Haltestellenabdeckung
- 55: Fahrzeugbauteil
- 56: Umhüllung
- 57: Umhüllung
- 58: Aufnahmeabschnitt
- 59: freies Ende
- 60: Positionierungselement
- 61: Haltestellenabdeckung
- 62: Fahrzeugbauteil
- 63: erstes Abdeckelement
- 64: zweites Abdeckelement
- 65: Schnapp- und/oder Rastverbindung
- 66: Kontaktierungsbereich
- 67: Schnapp- und/oder Rastabschnitt
- 68: Durchbruch
- 69: Rasthaken
- 70: Positionierungselement
- 71: Positionierungselement
- 72: freies Ende
- 73: Vertiefung
- 75: Kontaktierungsbereich
- 76: Kontaktierungsbereich
- 77: Kontaktierungsbereich
- 78: Ringfläche
- 79: Umhüllung
- 80: Kontaktierungsbereich

## Patentansprüche

1. Fahrzeugbauteil für ein Kraftfahrzeug mit einem Strukturteil (7, 16, 30) und mit einer Umhüllung (2, 18, 32, 38, 56, 57, 79), wobei das Strukturteil (7, 16, 30) zum Ausbilden der Umhüllung (2, 18, 32, 38, 56, 57, 79) mindestens teilweise oder vollständig mit einem Material umspritzt und/oder umgossen ist, wobei an einer Haltestelle (8) zum Halten des Strukturteils (7, 16, 30) in einem Spritz- und/oder Gusswerkzeug eine Haltestellenabdeckung (12, 15, 29, 36, 45, 54, 61) angeordnet ist, und die Haltestellenabdeckung (12, 15, 29, 36, 45, 54, 61) einen Kontaktierungsbereich (13, 23, 66, 75, 76, 77, 80) für ein Positionierungselement (24, 34, 40, 50, 60, 70, 71) des Spritz- und/oder Gusswerkzeuges bereitstellt, **dadurch gekennzeichnet, dass**
- die Haltestellenabdeckung (12, 15, 29, 36, 45, 54, 61) einen Aufnahmeabschnitt (21, 35, 48, 58) zum teilweisen Aufnehmen des Positionierungselementes (24, 34, 40, 50, 60, 70, 71) hat, oder
- die Haltestellenabdeckung (12, 15, 29, 36, 45, 54, 61) sich durch eine Öffnung (9) des Strukturteils (7, 16, 30) erstreckt, und mindestens einen Schnapp- und/oder Rastabschnitt (41, 47, 67) zum Herstellen einer formschlüssigen Verbindung der Haltestellenabdeckung (12, 15, 29, 36, 45, 54, 61) mit dem Strukturteil (7, 16, 30) aufweist.

2. Fahrzeugbauteil nach Anspruch 1, **dadurch gekennzeichnet, dass** die Haltestellenabdeckung (12, 15, 29, 36, 45, 54, 61) das Strukturteil (7, 16, 30) kontaktiert und teilweise von dem Material der Umhüllung (2,18, 32, 38, 56, 57, 79) umspritzt und/oder umgossen ist, wodurch die Haltestellenabdeckung (12, 15, 29, 36, 45, 54, 61) fest mit der Umhüllung (2, 18, 32, 38, 56, 57, 79) und/oder dem Strukturteil (7, 16, 30) verbunden ist.

3. Fahrzeugbauteil nach Anspruch 1 oder 2, **dadurch gekennzeichnet, dass** die Haltestellenabdeckung (12, 15, 29, 36, 45, 54, 61) und die Umhüllung (2, 18, 32, 38, 56, 57, 79) aus demselben Material gebildet ist, insbesondere ist die Haltestellenabdeckung (12, 15, 29, 36, 45, 54, 61) und/oder die Umhüllung (2, 18, 32, 38, 56, 57, 79) aus Kunststoff oder einem faserverstärkten Kunststoff gebildet.

4. Fahrzeugbauteil nach einem der vorhergehenden Ansprüche, **dadurch gekennzeichnet, dass** die Umhüllung (2, 18, 32, 38, 56, 57, 79) und die Haltestellenabdeckung (12, 15, 29, 36, 45, 54, 61) einen Korrosionsschutz für das Strukturteil (7, 16, 30) realisieren.

5. Fahrzeugbauteil nach einem der vorhergehenden Ansprüche, **dadurch gekennzeichnet, dass** das Positionierungselement (24, 34, 40, 50, 60, 70, 71) als ein Positionierungsstift ausgebildet ist.

6. Fahrzeugbauteil nach einem der vorhergehenden Ansprüche, **dadurch gekennzeichnet, dass** der Aufnahmeabschnitt (21, 35, 48, 58) sacklochartig ausgebildet.

7. Fahrzeugbauteil nach einem der vorhergehenden Ansprüche, **dadurch gekennzeichnet, dass** die Haltestellenabdeckung (12, 15, 29, 36, 45, 54, 61) mindestens einseitig an einer Fläche (19, 43) des Strukturteils (7, 16, 30) anliegt.

8. Fahrzeugbauteil nach einem der vorhergehenden Ansprüche, **dadurch gekennzeichnet, dass** die Haltestellenabdeckung (12, 15, 29, 36, 45, 54, 61) einteilig oder zweiteilig ausgebildet ist, insbesondere ist die zweiteilige Haltestellenabdeckung (12, 15, 29, 36, 45, 54, 61) mittels zweier Gleichteile gebildet.

9. Fahrzeugbauteil nach einem der vorhergehenden Ansprüche, **dadurch gekennzeichnet, dass** sich die Haltestellenabdeckung (12, 15, 29, 36, 45, 54, 61) durch ein Kreisloch oder ein Langloch, des Strukturteils (7, 16, 30) erstreckt, insbesondere wirkt die Haltestellenabdeckung (12, 15, 29, 36, 45, 54, 61) mit zwei voneinander abgewandten Seiten oder Flächen (19, 43) des Strukturteils (7, 16, 30) im Bereich der Öffnung (9) zusammen.

10. Fahrzeugbauteil nach einem der vorhergehenden Ansprüche, **dadurch gekennzeichnet, dass** der Schnapp- und/oder Rastabschnitt (41, 47, 67) zwei spiegelsymmetrisch zueinander angeordnete Rasthaken (42, 69) hat.

11. Fahrzeugbauteil nach einem der vorhergehenden Ansprüche, **dadurch gekennzeichnet, dass** das Strukturteil (7, 16, 30) aus einem Metall oder Blech gebildet ist, insbesondere ist das Fahrzeugbauteil (1, 17, 31, 37, 46, 55, 62) als ein Kunststoff-Metall-Hybrid-Bauteil, ein Pedal, ein Fahrwerkbauteil, ein Lenker oder eine Spurstange ausgebildet.

12. Verfahren zum Herstellen eines Fahrzeugbauteils (1, 17, 31, 37, 46, 55, 62) für ein Kraftfahrzeug mit einem Strukturteil (7, 16, 30) und mit einer Umhüllung (2, 18, 32, 38, 56, 57, 79), wobei das Strukturteil (7, 16, 30) zum Ausbilden der Umhüllung (2, 18, 32, 38, 56, 57, 79) mindestens teilweise oder vollständig mit einem Material umspritzt und/oder umgossen wird, wobei an einer Haltestelle (8) zum Halten des Strukturteils (7, 16, 30) in einem Spritz- und/oder Gusswerkzeug eine Haltestellenabdeckung (12, 15, 29, 36, 45, 54, 61) angeordnet wird, und die Haltestellenabdeckung (12, 15, 29, 36, 45, 54, 61) einen Kontaktierungsbereich (13, 23, 66, 75, 76, 77, 80) für ein Positionierungselement (24, 34, 40, 50, 60, 70, 71) des Spritz- und/oder Gusswerkzeuges bereitstellt, **dadurch gekennzeichnet, dass**
- das Positionierungselement (24, 34, 40, 50, 60, 70, 71) teilweise in einem Aufnahmeabschnitt (21, 35, 48, 58) der Haltestellenabdeckung (12, 15, 29, 36, 45, 54, 61) aufgenommen wird, oder
- mittels mindestens eines Schnapp- und/oder Rastabschnittes (41, 47, 67) der Haltestellenabdeckung (12, 15, 29, 36, 45, 54, 61), die sich durch eine Öffnung (9) des Strukturteils (7, 16, 30) erstreckt, eine formschlüssige Verbindung der Haltestellenabdeckung (12, 15, 29, 36, 45, 54, 61) mit dem Strukturteil (7, 16, 30) hergestellt wird.

13. Verfahren nach Anspruch 12, **dadurch gekennzeichnet, dass** die Haltestellenabdeckung (12, 15, 29, 36, 45, 54, 61) zum Halten des Strukturteils (7, 16, 30) in dem Spritz- und/oder Gusswerkzeug zwischen dem Strukturteil (7, 16, 30) und einem Positionierungselement (24, 34, 40, 50, 60, 70, 71) des Spritz- und/oder Gusswerkzeugs angeordnet wird.

14. Verfahren nach Anspruch 12 oder 13, **dadurch gekennzeichnet, dass** die Haltestellenabdeckung (12, 15, 29, 36, 45, 54, 61) teilweise von dem Material der Umhüllung (2, 18, 32, 38, 56, 57, 79) umspritzt und/oder umgossen wird, wodurch die Haltestellenabdeckung (12, 15, 29, 36, 45, 54, 61) fest mit der Umhüllung (2, 18, 32, 38, 56, 57, 79) und/oder dem Strukturteil (7, 16, 30) verbunden wird.

## Claims

1. Vehicle component for a motor vehicle, having a structural part (7, 16, 30) and having an enclosure (2, 18, 32, 38, 56, 57, 79), wherein the structural part (7, 16, 30) is encapsulated at least partially or completely with a material by injection moulding and/or casting to form the enclosure (2, 18, 32, 38, 56, 57, 79), wherein a holding point cover (12, 15, 29, 36, 45, 54, 61) is arranged at a holding point (8) for holding the structural part (7, 16, 30) in an injection moulding and/or casting tool, and the holding point cover (12, 15, 29, 36, 45, 54, 61) provides a contacting region (13, 23, 66, 75, 76, 77, 80) for a positioning element (24, 34, 40, 50, 60, 70, 71) of the injection moulding and/or casting tool, **characterized in that**
- the holding point cover (12, 15, 29, 36, 45, 54, 61) has a receiving portion (21, 35, 48, 58) for partially receiving the positioning element (24, 34, 40, 50, 60, 70, 71), or
- the holding point cover (12, 15, 29, 36, 45, 54, 61) extends through an opening (9) in the structural part (7, 16, 30) and has at least one snap-fitting and/or latching portion (41, 47, 67) for establishing a form-fitting connection between the holding point cover (12, 15, 29, 36, 45, 54, 61) and the structural part (7, 16, 30).

2. Vehicle component according to Claim 1, **characterized in that** the holding point cover (12, 15, 29, 36, 45, 54, 61) makes contact with the structural part (7, 16, 30) and is encapsulated at least partially by the material of the enclosure (2, 18, 32, 38, 56, 57, 79) by injection moulding and/or casting, as a result of which the holding point cover (12, 15, 29, 36, 45, 54, 61) is fixedly connected to the enclosure (2, 18, 32, 38, 56, 57, 79) and/or to the structural part (7, 16, 30).

3. Vehicle component according to Claim 1 or 2, **characterized in that** the holding point cover (12, 15, 29, 36, 45, 54, 61) and the enclosure (2, 18, 32, 38, 56, 57, 79) are made of the same material, in particular the holding point cover (12, 15, 29, 36, 45, 54, 61) and/or the enclosure (2, 18, 32, 38, 56, 57, 79) are made of plastic or a fibre-reinforced plastic.

4. Vehicle component according to one of the preceding claims, **characterized in that** the enclosure (2, 18, 32, 38, 56, 57, 79) and the holding point cover (12, 15, 29, 36, 45, 54, 61) realize corrosion protection for the structural part (7, 16, 30).

5. Vehicle component according to one of the preceding claims, **characterized in that** the positioning element (24, 34, 40, 50, 60, 70, 71) is in the form of a positioning pin.

6. Vehicle component according to one of the preceding claims, **characterized in that** the receiving portion (21, 35, 48, 58) is formed in the manner of a blind hole.

7. Vehicle component according to one of the preceding claims, **characterized in that** the holding point cover (12, 15, 29, 36, 45, 54, 61) bears against a surface (19, 43) of the structural part (7, 16, 30) at least on one side.

8. Vehicle component according to one of the preceding claims, **characterized in that** the holding point cover (12, 15, 29, 36, 45, 54, 61) has a one-part or two-part form, in particular the two-part holding point cover (12, 15, 29, 36, 45, 54, 61) is formed by means of two identical parts.

9. Vehicle component according to one of the preceding claims, **characterized in that** the holding point cover (12, 15, 29, 36, 45, 54, 61) extends through a circular hole or an elongate hole in the structural part (7, 16, 30), in particular the holding point cover (12, 15, 29, 36, 45, 54, 61), in the region of the opening (9), interacts with two sides or surfaces (19, 43) of the structural part (7, 16, 30) that face away from one another.

10. Vehicle component according to one of the preceding claims, **characterized in that** the snap-fitting and/or latching portion (41, 47, 67) has two latching hooks (42, 69) arranged mirror-symmetrically in relation to one another.

11. Vehicle component according to one of the preceding claims, **characterized in that** the structural part (7, 16, 30) is made of a metal or a metal sheet, in particular the vehicle component (1, 17, 31, 37, 46, 55, 62) is in the form of a plastic-metal hybrid component, a pedal, a chassis component, a link or a track rod.

12. Method for producing a vehicle component (1, 17, 31, 37, 46, 55, 62) for a motor vehicle, the vehicle component having a structural part (7, 16, 30) and having an enclosure (2, 18, 32, 38, 56, 57, 79), wherein the structural part (7, 16, 30) is encapsulated at least partially or completely with a material by injection moulding and/or casting to form the enclosure (2, 18, 32, 38, 56, 57, 79), wherein a holding point cover (12, 15, 29, 36, 45, 54, 61) is arranged at a holding point (8) for holding the structural part (7, 16, 30) in an injection moulding and/or casting tool, and the holding point cover (12, 15, 29, 36, 45, 54, 61) provides a contacting region (13, 23, 66, 75, 76, 77, 80) for a positioning element (24, 34, 40, 50, 60, 70, 71) of the injection moulding and/or casting tool, **characterized in that**
- the positioning element (24, 34, 40, 50, 60, 70, 71) is partially received in a receiving portion (21, 35, 48, 58) of the holding point cover (12, 15, 29, 36, 45, 54, 61), or
- a form-fitting connection between the holding point cover (12, 15, 29, 36, 45, 54, 61) and the structural part (7, 16, 30) is established by means of at least one snap-fitting and/or latching portion (41, 47, 67) of the holding point cover (12, 15, 29, 36, 45, 54, 61) that extends through an opening (9) in the structural part (7, 16, 30).

13. Method according to Claim 12, **characterized in that** the holding point cover (12, 15, 29, 36, 45, 54, 61) is arranged between the structural part (7, 16, 30) and a positioning element (24, 34, 40, 50, 60, 70, 71) of the injection moulding and/or casting tool to hold the structural part (7, 16, 30) in the injection moulding and/or casting tool.

14. Method according to Claim 12 or 13, **characterized in that** the holding point cover (12, 15, 29, 36, 45, 54, 61) is partially encapsulated by the material of the enclosure (2, 18, 32, 38, 56, 57, 79) by injection moulding and/or casting, as a result of which the holding point cover (12, 15, 29, 36, 45, 54, 61) is fixedly connected to the enclosure (2, 18, 32, 38, 56, 57, 79) and/or the structural part (7, 16, 30).

## Revendications

1. Composant de véhicule pour un véhicule automobile avec une partie de structure (7, 16, 30) et avec une enveloppe (2, 18, 32, 38, 56, 57, 79), la partie de structure (7, 16, 30) étant au moins partiellement ou totalement surmoulée et/ou enrobée avec un matériau pour former l'enveloppe (2, 18, 32, 38, 56, 57, 79), un recouvrement d'emplacement de maintien (12, 15, 29, 36, 45, 54, 61) étant agencé à un emplacement de maintien (8) pour le maintien de la partie de structure (7, 16, 30) dans un outil d'injection et/ou de coulée, et le recouvrement d'emplacement de maintien (12, 15, 29, 36, 45, 54, 61) fournissant une zone de contact (13, 23, 66, 75, 76, 77, 80) pour un élément de positionnement (24, 34, 40, 50, 60, 70, 71) de l'outil d'injection et/ou de coulée, **caractérisé en ce que**
- le recouvrement d'emplacement de maintien (12, 15, 29, 36, 45, 54, 61) a une section de réception (21, 35, 48, 58) pour la réception partielle de l'élément de positionnement (24, 34, 40, 50, 60, 70, 71), ou
- le recouvrement d'emplacement de maintien (12, 15, 29, 36, 45, 54, 61) s'étend à travers une ouverture (9) de la partie de structure (7, 16, 30), et présente au moins une section d'encliquetage et/ou d'enclenchement (41, 47, 67) pour établir une liaison par complémentarité de forme du recouvrement d'emplacement de maintien (12, 15, 29, 36, 45, 54, 61) avec la partie de structure (7, 16, 30).

2. Composant de véhicule selon la revendication 1, **caractérisé en ce que** le recouvrement d'emplacement de maintien (12, 15, 29, 36, 45, 54, 61) est en contact avec la partie de structure (7, 16, 30) et est partiellement surmoulé et/ou enrobé par le matériau de l'enveloppe (2, 18, 32, 38, 56, 57, 79), moyennant quoi le recouvrement d'emplacement de maintien (12, 15, 29, 36, 45, 54, 61) est relié de manière fixe à l'enveloppe (2, 18, 32, 38, 56, 57, 79) et/ou à la partie de structure (7, 16, 30).

3. Composant de véhicule selon la revendication 1 ou 2, **caractérisé en ce que** le recouvrement d'emplacement de maintien (12, 15, 29, 36, 45, 54, 61) et l'enveloppe (2, 18, 32, 38, 56, 57, 79) sont formés du même matériau, notamment le recouvrement d'emplacement de maintien (12, 15, 29, 36, 45, 54, 61) et/ou l'enveloppe (2, 18, 32, 38, 56, 57, 79) sont formés de matière plastique ou d'une matière plastique renforcée par des fibres.

4. Composant de véhicule selon l'une quelconque des revendications précédentes, **caractérisé en ce que** l'enveloppe (2, 18, 32, 38, 56, 57, 79) et le recouvrement d'emplacement de maintien (12, 15, 29, 36, 45, 54, 61) réalisent une protection contre la corrosion pour la partie de structure (7, 16, 30).

5. Composant de véhicule selon l'une quelconque des revendications précédentes, **caractérisé en ce que** l'élément de positionnement (24, 34, 40, 50, 60, 70, 71) est configuré sous la forme d'une broche de positionnement.

6. Composant de véhicule selon l'une quelconque des revendications précédentes, **caractérisé en ce que** la section de réception (21, 35, 48, 58) est configurée sous forme de trou borgne.

7. Composant de véhicule selon l'une quelconque des revendications précédentes, **caractérisé en ce que** le recouvrement d'emplacement de maintien (12, 15, 29, 36, 45, 54, 61) s'applique au moins d'un côté sur une surface (19, 43) de la partie de structure (7, 16, 30).

8. Composant de véhicule selon l'une quelconque des revendications précédentes, **caractérisé en ce que** le recouvrement d'emplacement de maintien (12, 15, 29, 36, 45, 54, 61) est configuré en une partie ou en deux parties, notamment le recouvrement d'emplacement de maintien (12, 15, 29, 36, 45, 54, 61) en deux parties est formé au moyen de deux parties identiques.

9. Composant de véhicule selon l'une quelconque des revendications précédentes, **caractérisé en ce que** le recouvrement d'emplacement de maintien (12, 15, 29, 36, 45, 54, 61) s'étend à travers un trou circulaire ou un trou oblong de la partie de structure (7, 16, 30), notamment le recouvrement d'emplacement de maintien (12, 15, 29, 36, 45, 54, 61) coopère avec deux côtés ou deux surfaces (19, 43) détournés l'un de l'autre de la partie de structure (7, 16, 30) dans la zone de l'ouverture (9).

10. Composant de véhicule selon l'une quelconque des revendications précédentes, **caractérisé en ce que** la section d'encliquetage et/ou d'enclenchement (41, 47, 67) a deux crochets d'enclenchement (42, 69) agencés selon une symétrie spéculaire l'un par rapport à l'autre.

11. Composant de véhicule selon l'une quelconque des revendications précédentes, **caractérisé en ce que** la partie de structure (7, 16, 30) est formée d'un métal ou d'une tôle, notamment le composant de véhicule (1, 17, 31, 37, 46, 55, 62) est configuré sous la forme d'un composant hybride matière plastique-métal, d'une pédale, d'un composant de châssis, d'un guidon ou d'une barre d'accouplement.

12. Procédé de fabrication d'un composant de véhicule (1, 17, 31, 37, 46, 55, 62) pour un véhicule automobile avec une partie de structure (7, 16, 30) et avec une enveloppe (2, 18, 32, 38, 56, 57, 79), la partie de structure (7, 16, 30) étant au moins partiellement ou totalement surmoulée et/ou enrobée avec un matériau pour former l'enveloppe (2, 18, 32, 38, 56, 57, 79), un recouvrement d'emplacement de maintien (12, 15, 29, 36, 45, 54, 61) étant agencé à un emplacement de maintien (8) pour le maintien de la partie de structure (7, 16, 30) dans un outil d'injection et/ou de coulée, et le recouvrement d'emplacement de maintien (12, 15, 29, 36, 45, 54, 61) fournissant une zone de contact (13, 23, 66, 75, 76, 77, 80) pour un élément de positionnement (24, 34, 40, 50, 60, 70, 71) de l'outil d'injection et/ou de coulée, **caractérisé en ce que**
- l'élément de positionnement (24, 34, 40, 50, 60, 70, 71) est partiellement reçu dans une section de réception (21, 35, 48, 58) du recouvrement d'emplacement de maintien (12, 15, 29, 36, 45, 54, 61), ou
- au moyen d'au moins une section d'encliquetage et/ou d'enclenchement (41, 47, 67) du recouvrement d'emplacement de maintien (12, 15, 29, 36, 45, 54, 61), qui s'étend à travers une ouverture (9) de la partie de structure (7, 16, 30), une liaison par complémentarité de forme du recouvrement d'emplacement de maintien (12, 15, 29, 36, 45, 54, 61) avec la partie de structure (7, 16, 30) est établie.

13. Procédé selon la revendication 12, **caractérisé en ce que** le recouvrement d'emplacement de maintien (12, 15, 29, 36, 45, 54, 61) est agencé entre la partie de structure (7, 16, 30) et un élément de positionnement (24, 34, 40, 50, 60, 70, 71) de l'outil d'injection et/ou de coulée pour le maintien de la partie de structure (7, 16, 30) dans l'outil d'injection et/ou de coulée.

14. Procédé selon la revendication 12 ou 13, **caractérisé en ce que** le recouvrement d'emplacement de maintien (12, 15, 29, 36, 45, 54, 61) est partiellement surmoulé et/ou enrobé par le matériau de l'enveloppe (2, 18, 32, 38, 56, 57, 79), moyennant quoi le recouvrement d'emplacement de maintien (12, 15, 29, 36, 45, 54, 61) est relié de manière fixe à l'enveloppe (2, 18, 32, 38, 56, 57, 79) et/ou à la partie de structure (7, 16, 30).
